Europäisches Patentamt

European Patent Office

Office européen des brevets

(11) Publication number: 0 417 802 B1

# EUROPEAN PATENT SPECIFICATION

(45) Date of publication of patent specification: 02.03.94

(51) Int. Cl.5: C01B 3/00, H01M 4/38, H01M 4/00

(21) Application number: 90117692.5

(22) Date of filing: 13.09.90

(54) Hydrogen storage body.

(30) Priority: 13.09.89 JP 235763/89
11.09.90 JP 239042/90

(43) Date of publication of application:
20.03.91 Bulletin 91/12

(45) Publication of the grant of the patent:
02.03.94 Bulletin 94/09

(84) Designated Contracting States:
DE FR GB

(56) References cited:
EP-A- 0 230 384

CHEMICAL ABSTRACTS, vol. 101, no. 2, 09
July 1984, Columbus, OH (US); M. PATEL, p.
154, no. 9996r&NUM;

CHEMICAL ABSTRACTS, vol. 109, no. 22, 28
November 1988, Columbus, OH (US); p. 220,
no. 193839f&NUM; & JP-A-6372849 (Mazda
Motor) 02.04.1988

CHEMICAL ABSTRACTS, vol. 107, no. 26, 28
December 1987, Columbus, OH (US); H. IM-
AMURA, p. 179, no. 239765t&NUM;

(73) Proprietor: CANON KABUSHIKI KAISHA
30-2, 3-chome, Shimomaruko,
Ohta-ku
Tokyo(JP)

(72) Inventor: Saito, Nobuyuki
c/o Canon Kabushiki Kaisha,
30-2, 3-chome
Shimomaruko, Ohta-ku, Tokyo(JP)

(74) Representative: Bühling, Gerhard, Dipl.-Chem.
et al
Patentanwaltsbüro
Tiedtke-Bühling-Kinne & Partner
Bavariaring 4
D-80336 München (DE)

**Description**

This invention relates to a hydrogen storage body, particularly to a hydrogen storage body which can store efficiently hydrogen within a short time.

Accordingly, the present invention is applicable widely to hydrogen purification-recovery device, heat pump, hydrogen storage device, actuator, cold nuclear fusion device, etc.

In recent years, hydrogen storage bodies such as hydrogen storage alloys, etc. are beginning to call attention for practical application not only for storage tanks of hydrogen (light hydrogen) fuel which becomes the clean energy source in the future, but also for batteries, automobiles, household goods, etc. As the use mode of the hydrogen storage body, there have employed the methods of filling the powder into a vessel, compression molding the powder with application of the pre-treatment such as microencapsulation or pelletizing with a binder, or attaching the metal hydride particles onto a porous metal, etc.

The reason why such mode is employed is that the crystal lattices of the hydrogen storage body will undergo expansion and shrinkage of volume through absorption and desorption of hydrogen (light hydrogen) within the range of 10 to 25%. That is, when, for example, charging and discharging are repeated as the battery by utilizing the property of the bulk hydrogen storage alloy to absorb and desorb hydrogen ions, corresponding to brittleness accompanied with expansion and shrinkage of the hydrogen storage body, fine cracks, fine powder formation phenomenon, change in shape, deterioration in absorption and desorption characteristics will occur.

For preventing deformation or disintegration of the hydrogen storage alloy structure accompanied with hydrogen storage and liberation, for example, Japanese Laid-open Patent Application No. 63-162884 discloses use of a hydrogen storage alloy having particle sizes of about the limit (about several $\mu$) for powder formation by hydrogen storage and liberation.

The EP-A 230 384 describes a hydrogen storage material comprising high surface area activated carbon and a minor amount of a transition metal, such as palladium, dispersed in the carbon.

On the other hand, as an example utilizing the hydrogen storage body, the cold nuclear fusion reported by the group of Professor Martin Fleischmann of Southampton University in U.K. and Professor Stanley Pons of Utah University in U.S.A., and Professor Steven E. Jones of Brighamyoung University in U.S.A. is now highlighted. For example, it is shown in S. E. Jones et al., Nature, <u>338</u> (1989), 737.

The cold nuclear fusion is in principle a method to carry out electrolysis with the electrodes of platinum or gold as the anode, and palladium (Pd) or titanium (Ti) having hydrogen storage ability as the cathod dipped in a solution containing heavy water and a small amount of a metal salt dissolved therein. And, it is attracting attention, because it is very simple as compared with the method of nuclear fusion of the prior art in which high temperature plasma is confined. For the cathode when giving rise to cold nuclear fusion, a plate-shaped or rod-shaped palladium or titanium mainly is used, and it has been considered that as the result of electrolysis, deuterium is stored in Pd or Ti as the electrode to effect nuclear fusion. Also, for causing such reaction to occur, much hydrogen storage must be effected within the electrode. The hydrogen storage body to be used for cold nuclear fusion has a bulk shape as different from the hydrogen storage body of the prior art. This is because, in cold nuclear fusion, deuterium having the same chemical properties as hydrogen is only occluded continuously, and it is not used in general way of hydrogen storage body employed for the hydrogen storage in which occlusion and liberation are repeated.

However, when fine powder is used as the hydrogen storage body, deformation and disintegration of the hydrogen storage alloy structure accompanied with storage and liberation of hydrogen can be prevented, but the time required for hydrogen storage and efficiency have not been sufficiently improved. Further, when excessive hydrogen is stored in the hydrogen storage body by use of a bulk hydrogen storage body for the electrode as in the case of causing cold nuclear fusion reaction to occur, due to slow storage rate of deuterium, it has been a great obstacle as the pre-preparation of the electrode for cold fusion to take a considerable time before obtaining practically hydrogen storage capacity.

For this reason, it has been desired to have a hydrogen storage body which can effect hydrogen storage efficiently within a shorter time and yet at high concentration.

The present invention has been accomplished in order to solve the tasks of the prior art as described above and its object is to provide a hydrogen storage body capable of effecting hydrogen storage efficiently into a hydrogen storage body within a short time.

It is also another object of the present invention to provide a hydrogen storage body capable of effecting hydrogen storage at high concentration within a short time as the cold nuclear fusion electrode.

Hydrogen in the present invention refers to light hydrogen, deuterium, tritium and a gas mixture thereof, unless otherwise particularly noted.

The present invention has been accomplished in order to solve such tasks. The invention relates to a hydrogen storage body comprising:

- a matrix comprising a hydrogen storage material and
- ultra-fine particles of a hydrogen storage material with an average particle size of 20 nm or less deposited on said matrix,

wherein the deposited thickness of the ultra-fine particles deposited on said matrix is 0.2 $\mu$m to 100 $\mu$m.

Fig. 1 is a schematic sectional view showing an embodiment of the hydrogen storage body of the present invention.

Fig. 2 is a schematic illustration of the electrolytic device to which the present embodiment is applicable.

Fig. 3 is a schematic illustration of the vacuum device for showing the preparation principle and the deposition method of ultra-fine particles.

Fig. 4 is a schematic illustration of the vacuum device for showing other preparation principle and deposition method of ultra-fine particles.

The present invention has been obtained as the result of intensive studies. In completing the present invention, the experiments for examining the hydrogen storage state onto the hydrogen storage body electrode to be used for cold nuclear fusion reaction were carried out, and consequently it was found that no deuterium could be sufficiently stored unless storage by electrolysis was performed over a considerably long time.

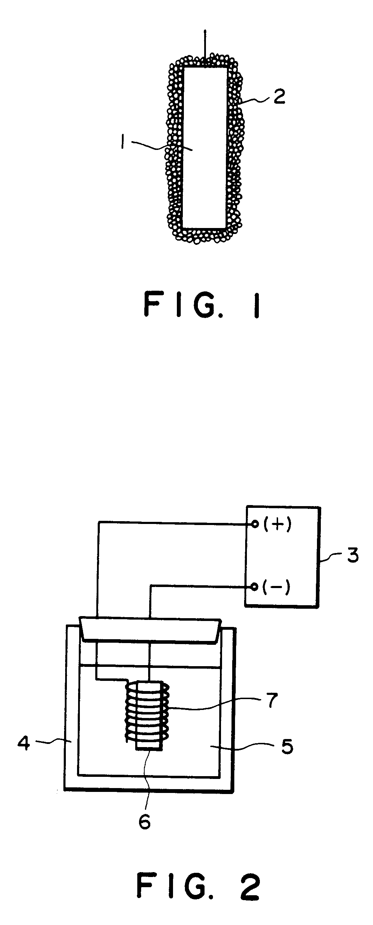

Fig. 2 is an electrolytic cell according an embodiment of the cold nuclear fusion device, and electrolysis is carried out by applying a constant voltage of 5 V from a constant voltage source 3 between the both electrodes of the anode 7 and the cathode 6 comprising a hydrogen storage body dipped into an electrolyte 5 comprising heavy water and a small amount of an additive of metal salt within the vessel 4. In this case, a palladium rod of 4 mm$\varnothing$ was employed for the cathode 6, and 0.1 mole of LiOD as the small amount of metal salt and heavy water for the electrolyte 5. A hydrogen storage material such as Pd or LaNi$_5$ has been known to be transitioned in its structure from $\alpha$ to $\beta$ as accompanied with storage of hydrogen. Hence, by examination of the transition situation of $\alpha \rightarrow \beta$, the state of hydrogen storage can be known. When the hydrogen storage body having previously stored deuterium by electrolysis of heavy water was measured by X-ray diffraction, while the surface of the palladium was a mixed phase of ($\alpha + \beta$) after elapse of 150 hours, the peak of the $\beta$ phase which supports storage of sufficient deuterium was confirmed after elapse of 450 hours. Shortly speaking, it has been found that storage of deuterium is still insufficient after about 150 hours. Thus, it has been found that a very long time is required before the hydrogen storage body becomes the state with sufficient storage of hydrogen. In the present invention, as the result of intensive studies for improving such hydrogen storage efficiency, it has been found that the storage efficiency can be enhanced extremely by making a hydrogen storage body containing ultra-fine particles comprising a hydrogen storage material with an average particle size of 20 nm or less which particles are deposited in a thickness of 0,2 $\mu$m to 100 $\mu$m on a matrix comprising a hydrogen storage material.

Substances have various characteristics (magnetic characteristics, electrical characteristics), and by making such substances smaller, it has been known that various characteristics different from the original solid substances will be exhibited, and the particles giving such state are called "ultra-fine particles" and distinguished from the general particles.

Generally speaking, up to particles with sizes of approximately about 0.1 $\mu$m, the characteristics do not differ so greatly from the characteristics of the solid substance, but when the substance becomes further finer particles, it has been considered that there is the critical limit from a certain size where the properties of particles become markedly different from greater particles. The changes of those properties have been considered to occur by the volume effect appearing as the result of extremely reduced volume of the substance and the surface effect accompanied with increase of surface area, and in the present invention, the phenomenon of greatly improved storage efficiency of hydrogen may be also due to participation of these effects.

Particularly, when the hydrogen storage body according to the present invention is employed as the electrode, due to the effect of the ultra-fine particles, the overvoltage of the electrolytic electrodes can be lowered, whereby superfluous side reactions other than generation of hydrogen can be suppressed to effect efficiently generation of hydrogen. Further, due to the surface effect, probability of occurrence of the hydrogen storage reaction on the surface is increased, whereby it may be considered that hydrogen storage can be effected with better efficiency.

Referring now to the drawings, the present invention is described.

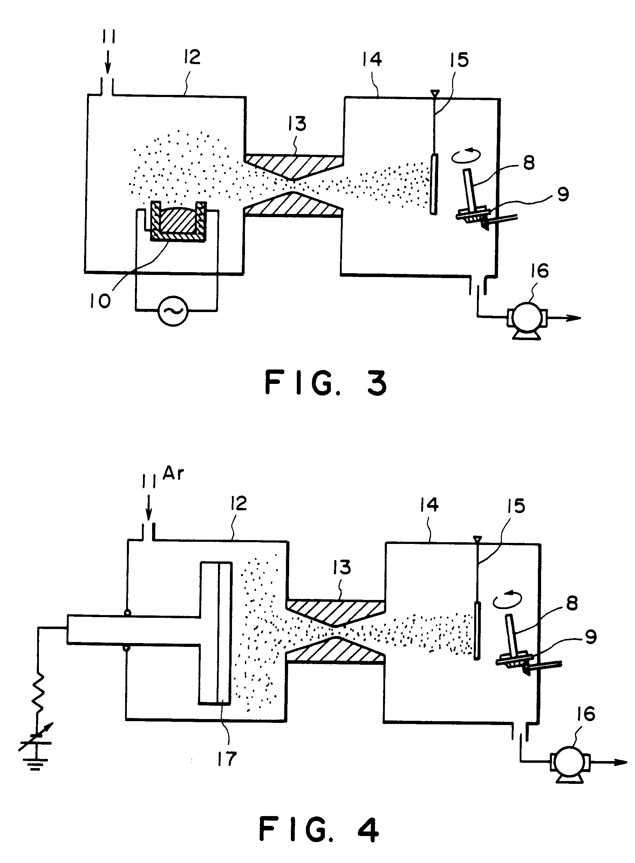

Fig. 3 and Fig. 4 illustrate schematically the representative device constitution for obtaining ultra-fine particles utilized as the hydrogen storage body of the present invention. The device in Fig. 3 utilizes the innert gas-vaporizing method in gas, and the device is constituted of a ultra-fine particle formation chamber 12, a ultra-fine particle deposition chamber 14 and a convergent-divergent nozzle 13 connecting the two chambers. 11 is an introduction system of Ar gas which is an inert gas, and 16 an evacuation system. 10 is a vaporization source of a hydrogen storage material which is the starting material of the ultra-fine particles arranged in the ultra-fine particle formation chamber 12, and 9 a sample stage which rotates with the matrix which is a sample 8 mounted thereon. 15 is a shutter for controlling the deposited thickness by performing initiation/completion of deposition of ultra-fine particles.

By use of such device, the matrix 8 is set on the stage 9, the device is internally evacuated by the evacuation system 16 to the order of $10^{-7}$ Torr, and the inert gas is introduced into the ultra-fine particle formation chamber 12. At this time, the diameter of the convergent-divergent nozzle 13 should be made preferably about 5 mm$\varnothing$, and the distance between the convergent-divergent nozzle 13 and the matrix 8 about 200 mm.

Next, from the vaporization source 10 such as crucible made of carbon, etc., hydrogen storage material such as palladium is vaporized and the ultra-fine particles formed are permitted to blow out through the nozzle 13 and deposited on the matrix 8.

Fig. 4 illustrates schematically the vacuum device for deposition of ultra-fine particles for sputtering utilizing the sputtering method. In the constitution of this device there is used the target of the hydrogen storage material which is the starting material of the ultra-fine particles for sputtering in place of the vaporisation source 10 of crucible existing on the ultra-fine particle formation chamber 12 of the device in Fig. 3, and the same portions as in Fig. 3 are affixed with the same numbers.

As to the deposition method, the device is internally evacuated to a vacuum degree to the order of $10^{-7}$ Torr by the evacuation system 16, and Ar gas 11 which is an inert gas is introduced into the ultra-fine particle formation chamber 12. At this time, the diameter of the convergent-divergent nozzle 13 should be made preferably about 4 mm$\varnothing$, and the distance between the convergent-divergent nozzle 13 and the matrix 8 about 150 mm. Sputtering is carried out according to DC sputtering device by applying a voltage on the target 17 of 4 inch $\varnothing$ to deposit ultra-fine particles formed on the matrix 8.

By use of these devices and methods, a hydrogen storage body having ultra-fine particles can be formed, but without use of these devices and method, any of devices and methods capable of forming the ultra-fine particles with good reproducibility and controlling particle sizes with ease can be utilized. The particle sizes of the ultra-fine particles formed in Fig. 3 and Fig. 4 can be controlled by the gas flow rate introduced into the ultra-fine particle formation chamber 12. In this case, the particle size can be made smaller as the gas flow rate is made lower. The gas introduced may be other than Ar gas, provided that it is an inert gas.

As the hydrogen storage material to be used for the ultra-fine particles and the matrix for depositing the ultra-fine particles thereon, there may be included single metals such as Pd, Ti, Fe, Ni, Pt, Mg, La, etc., and otherwise rare earth alloys such as $LaNi_5$, $La_{1-x}A_xN_5$ (A: Ti, Y, Ce), $LaNi_{5-y}B_y$ (B:Al, Cr, Mn, Co, Cu), $La_xN_{5-y}B_y$ (B: Al, In), etc., titanium type alloys such as TiFe, TiNi, $Ti_2Ni$, TiNi•$Ti_2Ni$, $TiNi_3$, $Ti_{2-x}Mo_xNi$, $Ti_{1-x}Zr_nM_2$ (M: V, Cr, Mo, Mn), etc., $CaNi_5$, $Ca_{1-x}Ni_5$, MgNi, $Mg_xNi$, $Mg_2Cu$, Pd type alloys, etc.

As the matrix shape, it is not limited to needle shape, rod shape, plate shape, etc., but any shape which can easily deposit ultra-fine particles thereon, also enables hydrogen storage with ease and can be used easily for electrodes may be employed. Further, the materials of the bulk portion of the hydrogen storage body and the deposited body of the ultra-fine particles may be of the same material or of different materials. If a compound hydrogen storage material such as $LaNi_5$ with much hydrogen storage amount is formed into ultra-fine particles, the composition of the particles will be deviated from the stoichiometric composition, and therefore it is particularly effective to use a different kind of hydrogen storage material for the ultra-fine particles. Also, the matrix may be a combination of a hydrogen storage material with another material.

The deposited thickness of the ultra-fine particles is required to be a thickness enough to cover the matrix surface and yet a thickness which will not peeled to be dropped off from the matrix, and such thickness is 0.2 $\mu$m to 100 $\mu$m, preferably 1 $\mu$m to 10 $\mu$m.

Having the ultra-fine particles of a hydrogen storage body deposited on the surface of a hydrogen storage body of the bulk matrix, the present invention is not limited thereto, but such use embodiment of the ultra-fine particles can be suitably determined as a matter of course. For example, when employed as the hydrogen generator, it can be made the electrode form having the ultra-fine particles formed on a substrate which is the matrix such as glass, Si, GaAs, metal, etc., or a substrate having a metal film formed thereon. As the hydrogen storage device, the ultra-fine particle powder can be also dispersed in a polymeric binder to be microencapsulated or formed into pellets to make the form which has been utilized in the prior art. Also, the dispersion in the above-mentioned polymeric binder can be also coated on a flexible substrate to prepare an electrode with high degree of freedom of form. Further, by filling the ultra-fine particle powder in a vessel, a hydrogen storage body for hydrogen purification-recovery device of high hydrogen storage amount can be also obtained.

Examples of the present invention practiced by preparing hydrogen storage bodies by use of the device as described above are described below.

Example 1

In this Example, as the formation device of ultra-fine particles, the inert gas-vaporizing device in gas shown in Fig. 3 was used as described below.

By use of a palladium rod 8 of 4 mm∅ and a length of 10 cm as the matrix, it was set on the stage 9. Also, palladium was set on the vaporization source 10. Then, the device was internally evacuated by the evacuation system 16 to a vacuum degree of the order of $10^{-7}$ Torr, followed by introduction of Ar gas into the ultra-fine particle formation chamber 12 at 80 SCCM. At this time, the pressure in the ultra-fine particle formation chamber 12 was made $8 \times 10^{-2}$ Torr; the pressure in the ultra-fine particle deposition chamber 14 was $3 \times 10^{-4}$ Torr; the diameter of the convergent-divergent nozzle 13 was 5 mm∅; and the distance between the convergent-divergent nozzle 13 and the sample 8 was 200 mm.

Next, the ultra-fine particles of Pd formed by vaporization of palladium Pd from the vaporization source 10 were permitted to blow out through the nozzle 13 and deposited on the matrix.

The Pd ultra-fine particles at this time were confirmed to have particles sizes of 100 to 400 Å with an average particle size of 200 Å by a field electron radiation type scanning electron microscope (FE-SEM). The conditions were set to a deposited thickness of about 3 $\mu$m. The sample obtained was applied with heat treatment at 400 to 500 °C in vacuum to improve adhesion of ultra-fine particles.

The hydrogen storage body thus prepared had a structure as shown in Fig. 1, comprising the matrix 1 which is a bulk hydrogen storage material of Pd and ultra-fine particles 2 which is a hydrogen storage material of Pd deposited thereon, and this was employed as the electrode.

This electrode was set as the cathode 6 in Fig. 2 to carry out electrolysis. As the standard electorolyte 5, a heavy water solution of 0.1 mol/liter of LiOD was employed, and a platinum wire of 0.5 mm∅ as the anode 7, and while an application voltage of 5 V made constant, under the condition of a current density of about 90 mA/cm$^2$, electrolysis was carried out for 150 hours.

After electrolysis, structural analysis of the bulk hydrogen storage body was conducted by X-ray analysis and the concentration analysis of deuterium absorbed by the tetrapolar mass analysis method. For analysis of the deuterium concentration, the sample was placed in a quartz cell, and after vacuum evacuation within the cell at room temperature to $1 \times 10^{-6}$ Torr, the sample was elevated in temperature by a heater at a rate of 4 °C/min. up to 550 °C. The temperature was maintained for 2 hours, and the liberated gas was analyzed. For deuterium, the peak at $m/e = 4$ was measured and its integrated amount was determined.

Comparative Example 1

The same treatments and analyses as in Example 1 were carried out except for effecting no deposition of palladium ultra-fine particles. This is made Comparative example 1.

Thus, the integrated amount of ion peak can be normalized with Comparative example 1 as being 1.0, and the integrated amounts of Examples can be shown by comparing relatively the ion peak integrated amounts per unit volume. Table 1 as described below shows the results, and from the Table, it can be understood that, by laminating a deposited body comprising ultra-fine particles of palladium, deuterium can be sufficiently stored within a short time which is about 1/3 of the prior art, and also the $\beta$-phase exhibiting storage of deuterium is sufficiently detected also by X-ray analysis in this Example.

Example 2

In place of the Pd rod in Example 1, a plate of LaNi$_5$ of 10 mm x 100 mm x 3 mmt was employed as the bulk hydrogen storage alloy. Further, in place of the deposited body of palladium ultra-fine particles, titanium ultra-fine particles were laminated on the LaNi$_5$ plate by means of the vacuum device for deposition of ultra-fine particles for sputtering shown in Fig. 4. In forming ultra-fine particles, Ti was employed as the target for sputtering.

As to the deposition method, evacuation was effected by the evacuation system 16 to a vacuum degree in the device to the order of $10^{-7}$ Torr, and Ar gas 11 was introduced at 100 SCCM into the ultra-fine particle formation chamber 12. At this time, the pressure in the ultra-fine particle formation chamber 12 was made 0.8 Torr, the pressure in the ultra-fine particle deposition chamber 14 was $8 \times 10^{-4}$ Torr; the diameter of the convergent-divergent nozzle 13 was 4 mm$\phi$; and the distance between the convergent-divergent nozzle 13 and the sample 8 was 150 mm. Sputtering was carried out by a DC sputtering device under the conditions of an application voltage of -900 V and a power of 360W relative to the Ti target 17 of 4 inch $\emptyset$, and the Ti ultra-fine particles were deposited to about 5 $\mu$m on the sample 8. At this time, the Ti ultra-fine particles were confirmed by FE-SEM to have particle sizes of 40 to 200 Å with an average particle size of 80 Å. The sample was applied with heat treatment at 500 to 700 °C in vacuum.

Comparative Example 2

The same treatment and analyses as in Example 2 were conducted except for effecting deposition of titanium ultra-fine particles in Example 2. This is made Comparative example 2.

The integrated amounts of the ion peaks of Example 2 and Comparative example 2 were relatively compared similarly as in Example 1 and Comparative example 1. The results are shown in Table 1, and from the Table, it can be understood that, similarly as relative comparison between Example 1 and Comparative example 1, accumulation of deuterium can be effected more sufficiently within a short time in Comparative example 1 relative to Comparative example 2, and more $\beta$-phase exhibiting sufficient accumulation of deuterium is also detected by X-ray analysis.

Table 1

|  | Peak integrated value | Structure of bulk body by X-ray analysis |
|---|---|---|
| Example 1 | 1.6 | $\beta$ phase |
| Comparative example 1 | 1.0 | $(\alpha + \beta)$ phase |
| Example 2 | 1.3 | $\beta$ phase |
| Comparative example 2 | 1.0 | $(\alpha + \beta)$ phase |

Example 3

Next, the difference in hydrogen storage efficiency accompanied with the size of the ultra-fine particles to be deposited is shown.

The same experiment as in Example 1 was carried out except for varying the amount of Ar gas introduced into the ultra-fine particle formation chamber 12 to 20, 50, 100, 150 and 200 SCCM. At this time, the Pd fine particles were found to have average particle sizes of 100 Å, 170 Å, 200 Å, 250 Å and 280 Å.

After electrolysis, according to the same method as carrying out the concentration analysis of deuterium absorbed by the tetrapolar mass analysis method in Example 1, the deuterium ion peak integrated amount was determined. The deuterium ion peak integrated amounts at the respective average particle sizes are normalized with the result in Example 1 being as 1.0 and shown in Table 2. As can be seen from the Table, the storage amount of deuterium is abruptly increased at average particle sizes of the ultra-fine particles of 200 Å or less.

Table 2

|  | Average particle size | Peak integrated value |
|---|---|---|
| Example 1 | 200 Å | 1.0 |
| Example 3 | 100 Å | 1.2 |
|  | 170 Å | 1.1 |
|  | 220 Å | 0.7 |
|  | 250 Å | 0.7 |
|  | 280 Å | 0.6 |
| Comparative Example 1 | - | 0.6 |

As described above, by laminating a deposited body comprising ultra-fine particles of a hydrogen storage material on a bulk hydrogen storage material (matrix) to provide an electrode which accelerates deuterium accumulation by electrolysis, an electrode having pratical hydrogen storage capacity for which a bulk material can be used as such without requiring much labor could be obtained by the treatment within a short term.

In the above Examples, description has been made about the case of storing deuterium by absorption, but the present invention is also effective as the storage body of light hydrogen as a matter of course.

As described above, according to the present invention, a hydrogen storage body capable of storing hydrogen efficiently at high concentration within a short time could be obtained.

## Claims

1. A hydrogen storage body comprising:
   - a matrix comprising a hydrogen storage material and
     - ultra-fine particles of a hydrogen storage material with an average particle size of 20 nm or less deposited on said matrix,
   wherein the deposited thickness of the ultra-fine particles deposited on said matrix is 0.2 $\mu$m to 100 $\mu$m.

2. A hydrogen storage body according to Claim 1, wherein said ultra-fine particles and matrix comprise hydrogen storage materials different from each other.

3. A hydrogen storage body according to Claim 1 or Claim 2, wherein said ultra-fine particles are formed of Pd.

4. A hydrogen storage body according to Claim 2, wherein said ultra-fine particles are formed of Pd, and said matrix is formed of LaNi$_5$.

## Patentansprüche

1. Wasserstoffspeicherkörper mit:
   einer Matrix, die ein Wasserstoffspeichermaterial aufweist, und
   ultrafeinen Partikeln aus einem Wasserstoffspeichermaterial, die eine durchschnittliche Partikelgröße von 20 nm oder weniger aufweisen und die auf der Matrix abgeschieden sind, wobei die abgeschiedene Dicke der ultrafeinen, auf der Matrix abgeschiedenen Partikel 0,2 $\mu$m bis 100 $\mu$m beträgt.

2. Wasserstoffspeicherkörper nach Anspruch 1, bei dem die Wasserstoffspeichermaterialien der ultrafeinen Partikel und der Matrix verschieden voneinander sind.

3. Wasserstoffspeicherkörper nach Anspruch 1 oder Anspruch 2, bei dem die ultrafeinen Partikel aus Pd hergestellt sind.

4. Wasserstoffspeicherkörper nach Anspruch 2, bei dem die ultrafeinen Partikel aus Pd hergestellt sind und die Matrix aus LaNi$_5$ hergestellt ist.

## Revendications

1. Corps pour le stockage d'hydrogène, comprenant :
   - une matrice comprenant une matière de stockage d'hydrogène, et
     - des particules ultrafines d'une matière de stockage d'hydrogène, ayant un diamètre moyen de particules égal ou inférieur à 20 nm, déposées sur ladite matrice,
   dans lequel l'épaisseur du dépôt des particules ultrafines, déposées sur ladite matrice, est comprise dans l'intervalle de 0,2 $\mu$m à 100 $\mu$m.

2. Corps pour le stockage d'hydrogène suivant la revendication 1, dans lequel les particules ultrafines et la matrice comprennent des matières de stockage d'hydrogène différentes l'une de l'autre.

3. Corps pour le stockage d'hydrogène suivant la revendication 1 ou la revendication 2, dans lequel les particules ultrafines sont formées de Pd.

4. Corps pour le stockage d'hydrogène suivant la revendication 2, dans lequel les particules ultrafines sont formées de Pd et la matrice est formée de $LaNi_5$.

FIG. 1

FIG. 2

EP 0 417 802 B1

FIG. 3

FIG. 4

10